# EUROPÄISCHE PATENTSCHRIFT

(11) **EP 0 778 172 B1**
(45) Veröffentlichungstag und Bekanntmachung des Hinweises auf die Patenterteilung: **29.03.2000**
(21) Anmeldenummer: 96119269.7
(22) Anmeldetag: 02.12.1996
(51) Int. Cl.: B60J 10/00, B60J 10/08

(54) **SAS - Montageverfahren für Dicht- und Abdeckstreifen sowie Vorrichtung**
Method and apparatus for assembling sealing- and coveringstrips
Procédé de montage pour bandes d'étanchéité et de couverture et dispositif

(30) Priorität: 08.12.1995 DE 19545733
(43) Veröffentlichungstag der Anmeldung: 11.06.1997
(73) Patentinhaber: SAAR-GUMMIWERK GmbH, 66687 Wadern (DE)
(72) Erfinder: Sehr, Ralf, 66679 Losheim (DE); Flauss, Hasso, 66606 St. Wendel-Winterbach (DE)
(74) Vertreter: Schulte, Jörg, Dipl.-Ing.

(56) Entgegenhaltungen:
- EP-A- 0 449 705
- DE-A- 4 401 092
- GB-A- 2 237 836
- US-A- 4 620 354

## Beschreibung

Die Erfindung betrifft ein Verfahren zum Anbringen von Dicht- und Abdeckstreifen auf den Randbereich von Öffnungen, wobei ein Profilschlauch auf den Flansch zusammengedrückter, benachbarter Karosserieteile eines Kraftfahrzeuges mit seinen innenseitig vorstehenden Lippen herangeführt, aufgesteckt und an ihn angepresst wird. Die Erfindung betrifft außerdem eine Vorrichtung zum Anbringen von Dicht- und Abdeckstreifen und damit zur Durchführung des Verfahrens mit einer um die Öffnung verfahrbaren Einheit, die über eine den Profilschlauch beeinflussende und am Flansch verfahrbare Rolle verfügt.

Derartige Montageverfahren werden insbesondere im Kraftfahrzeugbau eingesetzt, um die vor allem im Bereich der Öffnungen verbleibenden Flansche benutzerfreundlich einzufassen. Insbesondere im Bereich der Fenster und Türen derartiger Karosserien sind diese Flansche vorhanden. Die darauf angebrachten Dicht- und Abdeckstreifen werden umklammernd darauf angebracht und umgreifen die Flansche, so daß diese abgedeckt und geschützt sind und gleichzeitig die Insassen des Fahrzeuges nicht beeinträchtigen. Wie schon aus dem Namen zu entnehmen ist, dienen diese Dicht- und Abdeckstreifen aber nicht nur zum Absichern der Flansche, sondern auch zum Abdichten vor allem der Türen sowie auch der Kofferraumabdeckung. Die Dicht- und Abdeckstreifen weisen daher meist einen Profilschlauch auf, der beim Schließen der Tür zusammengedrückt wird, um seine Dichtwirkung voll zu entfalten. Bekannt sind sogenannte Rollforming-Systeme, bei denen das Gummi/Metallteil des Profilschlauches zunächst von Hand auf den Flansch aufgedrückt und dann mit einem Handgerät verformt wird. Die Positionierung muß umlaufend immer wieder neu ausgeführt werden, so daß ein optimaler Sitz des Dicht- und Abdeckstreifens sehr vom jeweiligen Bedienungsmann abhängig ist. Besonders kritisch ist dieses System zu bewerten, wenn es sich um sehr enge Radien handelt. Bekannt ist es darüber hinaus aus der DE-OS 44 11 433 den Klemm- und Führungsvorgang über einen Automaten vorzunehmen, wobei der Profilschlauch zunächst von Hand auf den Flansch aufgesteckt werden muß. Mit Hilfe des Automaten wird dann der Träger bzw. eine Seite des U-förmigen Trägers an den Flansch durch eine Anpreßvorrichtung angeformt. Zusätzlich zu der Anpreßvorrichtung, hier einer Quetschrolle sind Antriebs- und Führungsrollen vorgesehen, wobei es auch hier letztlich wieder darauf ankommt, ob der Bedienungsmann den Profilschlauch vorab richtig auf den Flansch aufgesetzt hat. Eine Überwachung des jeweiligen genauen Sitzes ist weder während noch nach Montage des Profilschlauches möglich.

Bekannt ist gemäß DE-A1-44 01 092 eine Dichtungsmontage mit einem Hochfrequenzhammer, wobei abweichend von der vorab beschriebenen Ausführung ein Profilschlauch mit geschlossenem Klemmbereich auf den Flansch aufgeschlagen wird. Über eine Grob- und/oder Feinführung erfolgt eine möglichst genaue Positionierung des Profilschlauches zum Flansch. Über einen Hammer wird der Profilschlauch dann angepresst. Nachteilig bei diesem Verfahren ist das zeitintensive und mit sehr hohem technischen Aufwand notwendige Ausrichten des Montageroboters zum Flansch, wodurch sich erhebliche Probleme bezüglich der Taktzeit ergeben. Nachteilig ist außerdem, daß bei einem derartigen Aufschlagen des Profilschlauches ein genauer bzw. optimaler Sitz der im geschlossenen Profil angeordneten Lippen nicht gewährleistet ist. Vielmehr kann insbesondere bei schrägem Ansetzen oder schrägem Aufschlagen des Profilschlauches eine oder mehrere derartiger Lippen abgeschert werden. Eine ungenaue oder gar unbefriedigende Abdichtung ist dann die Folge.

Der Erfindung liegt daher die Aufgabe zugrunde, ein Verfahren und eine Vorrichtung zu schaffen, mit denen eine entscheidend vereinfachte und weitgehend automatisierte Profilschlauchmontage bei optimalem Sitz des Profilschlauches auf dem Flansch gesichert ist.

Die Aufgabe wird gemäß der Erfindung dadurch gelöst, daß der mit seinem Träger vorab dem Flansch angepaßt ausgebildete Profilschlauch auf den Flansch unter Berücksichtigung der Meßergebnisse einer unmittelbar voreilenden Abtastung axial über eine Andrückautomatik mit Montagerolle zielgemäß und genau aufgesetzt und dann schonend aufgerollt wird.

Zunächst einmal wird wie bei der Dichtungsmontage mit einem Hochfrequenzhammer mit einem vorab hergestellten, d. h. mit einem geschlossenen Klemmbereich ausgerüsteten Profilschlauch gearbeitet. Dieser Profilschlauch wird automatisch auf den Flansch aufgesetzt und dann auf ihn aufgerollt, d. h. also schonend aufgeschoben. Dieser Vorgang läuft nun abweichend von bisher bekannten Verfahren unter Berücksichtigung der vorab durchgeführten Überprüfung des Flansches ab, d. h. über die vorgeschaltete Abtastung wird festgestellt, wo der Flansch und wie er verläuft und ggf. auch wie er ausgebildet ist. Diese entsprechend ermittelten Meßergebnisse werden an die Andrückautomatik weitergeleitet und von dieser ausgewertet, um dann den Profilschlauch wie schon erwähnt zielgemäß und genau aufzusetzen. Ausgeschlossen sind damit Beschädigungen der wichtigen Lippen wie auch der Innenseite des jeweiligen Klemmprofils. Vielmehr wird durch die entsprechende Abtastung der Flansch jeweils genau mittig so zwischen die Lippen und damit in das Klemmprofil eingeschoben, daß ein genauer und vollständiger Sitz des Dicht- und Abdeckstreifens gewährleistet ist. Ein so angeordneter und montierter Profilschlauch sitzt optimal und kann damit auch seine Funktion optimal erfüllen, ohne daß die Gefahr besteht daß aufgrund falschen Handlings Probleme entstehen können.

Nach einer zweckmäßigen Ausbildung der Erfindung ist vorgesehen, daß die Führung des Profilschlauches und das Andrücken unter Wahrung der Schlauchform und der Anordnung der Lippen ausgeführt wird. Weiter vorne ist bereits darauf hingewiesen worden, daß es für die Funktion des Profilschlauches wichtig ist, daß er schonend auf den Flansch aufgeschoben wird. Dies wird unter gleichzeitiger Berücksichtigung der jeweiligen Form des Profilschlauches vorgenommen, der nicht wie bei bisher bekannten Verfahren während des Aufpressens verformt werden muß, um den Montageerfolg überhaupt zu sichern. Vielmehr wird der gesamte Profilschlauch sehr schonend auf den Steg bzw. auf den Flansch aufgerollt, wobei sich die auf beiden Seiten vorstehenden Lippen dicht an den eingeschobenen Flansch anlegen und so abdichten.

Zur Durchführung des Verfahrens dient eine Vorrichtung mit einer um die Öffnung verfahrbaren Einheit, die über eine den Profilschlauch beeinflussende und am Flansch entlang verfahrbare Rolle verfügt. Dieser bekannte Stand der Technik verfügt über einen Hilfsrahmen, der der jeweiligen Öffnung angepaßt ist und der über eine Anpreßeinheit mit Vorschubrolle verfügt. Wie schon erwähnt, wird der Profilschlauch auf den Flansch aufgesetzt und dann entsprechend verformt, um den notwendigen oder gewünschten Klemmbereich zu erzeugen. Demgegenüber verfügt die Vorrichtung gemäß der Erfindung nicht über einen entsprechenden Hilsrahmen und mehrere Rollen, sondern hier ist vielmehr die Rolle als den einen geschlossenen Klemmbereich aufweisenden Profilschlauch auf den Flansch aufrollende Montagerolle ausgebildet ist, der eine führungsmäßig mit ihr verbundene Flanschabtasteinrichtung vorgeordnet ist. Damit kann über die Montagerolle der entsprechend vorgefertigte Profilschlauch so mit seinem vorhandenen Klemmbereich auf den Flansch aufgerollt werden, daß die schon erwähnte schonende Behandlung gesichert ist, wobei genau die mittige bzw. für die Dichtwirkung optimale Einrollsituation über die mit ihr verbundene Flanschabtasteinrichtung gewährleistet ist. Diese Flanschabtasteinrichtung läuft vor der eigentlichen Montagerolle, überprüft den Flansch sowohl bezüglich seiner Stellung wie seines Zustandes und sichert so eine genaue Führung der nachkommenden, den Profilschlauch aufrollenden Montagerolle. Die jeweilige Flanschposition wird durch die Flanschabtasteinrichtung an die Montagerolle übertragen, die dann entsprechend geführt auf den Profilschlauch einwirkt. Die Montagebewegung der Andrück- bzw. Führungseinheit in Laufrichtung Flansch geht von einem im Inneren der Karosserieöffnung liegenden Antrieb aus.

Um den rollenden Betrieb der Gesamteinrichtung und damit eine optimale und gemaue Führung zu erleichtern, ist vorgesehen, daß die Flanschabtasteinrichtung als Führungsrolle ausgebildet ist. Diese Führungsrolle wird somit genau vor der Montagerolle geführt und kann die notwendigen Einzelheiten bezüglich des Flansches an die Montagerolle weitergeben.

Eine weitere zweckmäßige Ausbildung sieht vor, daß die Flanschabtasteinrichtung mechanisch und/oder elektrisch/elektronisch, diese entsprechend führend mit der Montagerolle verbunden ist. Die mechanische Verbindung reicht dann aus, wenn lediglich die Richtungsänderung des Flansches berücksichtigt werden soll. Sollen aber auch andere Meßwerte beim Aufrollvorgang mitberücksichtigt werden, ist eine elektronische Verbindung oder eine zusätzliche entsprechende Verbindung zweckmäßig.

Je nach Größe der Öffnung und damit Länge des Flansches und auch nach Zustand des Flansches kann es zweckmäßig und notwendig sein, den Abstand der Flanschabtasteinrichtung zur Montagerolle zu verändern. Ein großer Abstand ist beispielsweise dann ausreichend, wenn der Flansch im Prinzip keine wesentlichen Veränderungen erwarten läßt. Um diesen unterschiedlichen Situationen genügen zu können, ist vorgesehen, daß die Flanschabtasteinrichtung in einem vorgebbaren und damit auch veränderbaren Abstand zur Montagerolle angeordnet mit der verfahrbaren Einheit verbunden ist. Damit ist ergänzend zum Ausdruck gebracht, daß die verfahrbare Einheit die Montagerolle und auch die Flanschabtasteinrichtung verfährt, so daß die notwendigen Informationen auch in der richtigen Art an die Montagerolle weitergeleitet und von dort aus ausgewertet werden.

Eine jeweils optimale Montageposition des Profilschlauches ist einzuhalten, wenn die Montagerolle direkt oder über eine Führungseinheit frei gelagert ausgebildet ist und mit dem im Inneren der Öffnung angeordneten Antrieb der Einheit verbunden ist. Die freie Lagerung der Einzelteile der Einheit und zwar der Teile, die um die Öffnung herumgeführt wird, sichert eine genaue Einhaltung der vorgegebenen Position und ein jeweils genaues Aufbringen bzw. Aufrollen des Profilschlauches auf den Flansch.

Weiter vorne ist darauf hingewiesen worden, daß es zweckmäßig ist, wenn der gesamte Profilschlauch über die Montagerolle schonend mit seinem geschlossenen Klemmbereich auf den Flansch aufgerollt wird. Dies ist insbesondere dadurch gewährleistet, daß die Montagerolle umfangseitig dem Profilschlauch angepaßte Ausnehmungen aufweist. Der Profilschlauch liegt in diesen Ausnehmungen, sowohl bezüglich seines kanalartigen Dichtelementes wie auch des Klemmbereiches, der ja dann auf den Flansch aufgerollt und damit schonend aufgeschoben wird.

Wiederum um eine genaue Positionierung des Profilschlauches zu gewährleisten, sieht die Erfindung vor, daß die Ausnehmungen in der Montagerolle den Profilschlauch mit dem durch den Träger vorgegebenen, geschlossenen Klemmbereich annähernd rechtwinklig fixierend angeordnet und ausgebildet sind. Damit kann die Montagerolle, die ja frei gelagert ist, jeweils so gefahren und geschwenkt werden, daß sie den genauen Sitz des Profilschlauches und hier insbesondere des Klemmbereiches sichert. Da der Profilschlauch mit seinem Klemmbereich annähernd rechtwinklig fixiert ist, kann die notwendige Anpassung an den Flansch einfach und sicher vorgenommen werden.

Aufgrund der besonderen Ausbildung der Montagerolle, der Führungseinheit und der Flanschabtasteinrichtung kann mit einem verhältnismäßig einfachen Antrieb gearbeitet werden, der etwa mittig der Öffnung positioniert ist. Jetzt ist ergänzend vorgesehen, daß der Antrieb schwenkbar ausgebildet und mit Montagerolle, Führungseinheit und Flanschabtasteinrichtung über einen Zylinder verbunden ist. Über den Zylinder kann der sich drehende Antrieb mit den einzelnen Teilen der Einheit immer im "Andruckbereich" gehalten werden, um so das Aufrollen des Profilschlauches auf den Flansch immer zu gewährleisten. Ergänzend ist dabei vorgesehen, daß der Zylinder stangenseitig gelenkig mit dem Antrieb verbunden ist, so daß auch noch eventuelle zusätzliche Bewegungen durch die Montagerolle ausgeführt werden können, weil der Zylinder als solcher wiederum um den eigentlichen Antrieb herum schwenkbar ist.

Die beschriebene Vorrichtung muß zum Teil um Säulen herumgeführt werden und damit erhebliche Radien abfahren, was dadurch erleichtert ist, daß die Führungseinheit und Flanschabtasteinrichtung über ein Schwenkgelenk mit dem Zylinder verbunden sind. Diese voreilenden Teile werden somit unabhängig von der eigentlichen Montagerolle schon vorab geschwenkt, wobei sie die entsprechenden Informationen an die Montagerolle weitergeben. Eine gegenseitige Behinderung dieser einzelnen Rollen ist vorteilhaft ausgeschlossen.

Die Erfindung zeichnet sich insbesondere dadurch aus, daß ein Verfahren und eine Vorrichtung geschaffen ist, mit deren Hilfe für die Abdichtung und die Absicherung von Flanschen im Bereich beispielsweise von Karosserieöffnungen vorgesehene Profilschläuche so sicher und genau aufgebracht werden können, daß eine Beeinträchtigung ihrer Funktion ausgeschlossen ist. Der jeweilige Profilschlauch bzw. das Profil wird genau wie vorgegeben schonend auf den jeweiligen Flansch aufgeschoben, wobei dieses Aufschieben oder genauer gesagt Aufrollen unter Berücksichtigung des jeweiligen Zustandes bzw. Verlaufes des Flansches erfolgt. Überraschend ist, daß eine derartige Vorrichtung verhältnismäßig einfach baut, wobei dies unter anderem dadurch erreicht wird, daß die Andrück- und Führungseinheit frei gelagert ist. Eine immer optimale Montageposition des Profilschlauches ist gewährleistet. Dabei wird der einzelne Profilschlauch durch eine angepaßte Montagerolle schonend geführt und auf den Flansch aufgeschoben und zwar so, daß die im geschlossenen Klemmprofil innenseitig vorstehenden Lippen genau gezielt an den Flansch angelegt werden. Das Verfahren bzw. die Vorrichtung ist vorteilhaft toleranzunempfindlich und zwar vorteilhafterweise ohne daß die Bedienungsmannschaft eingreifen muß. Zwar ist es zweckmäßig, die Ausgangsposition durch den Bedienungsmann einstellen zu lassen, doch kann auch dieses automatisch erfolgen.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine vereinfachte Darstellung einer in einer Öffnung mittig angeordneten Montagevorrichtung,
- Fig.2: den Einwirkunsbereich der Montagevorrichtung in vergrößerter Wiedergabe,
- Fig. 3: eine Montagerolle im Schnitt mit eingelegtem Profilschlauch und
- Fig. 4: eine Montagerolle im Schnitt mit eingelegtem Profilschlauch und annähernd in die Endposition geschobenen Flansch.

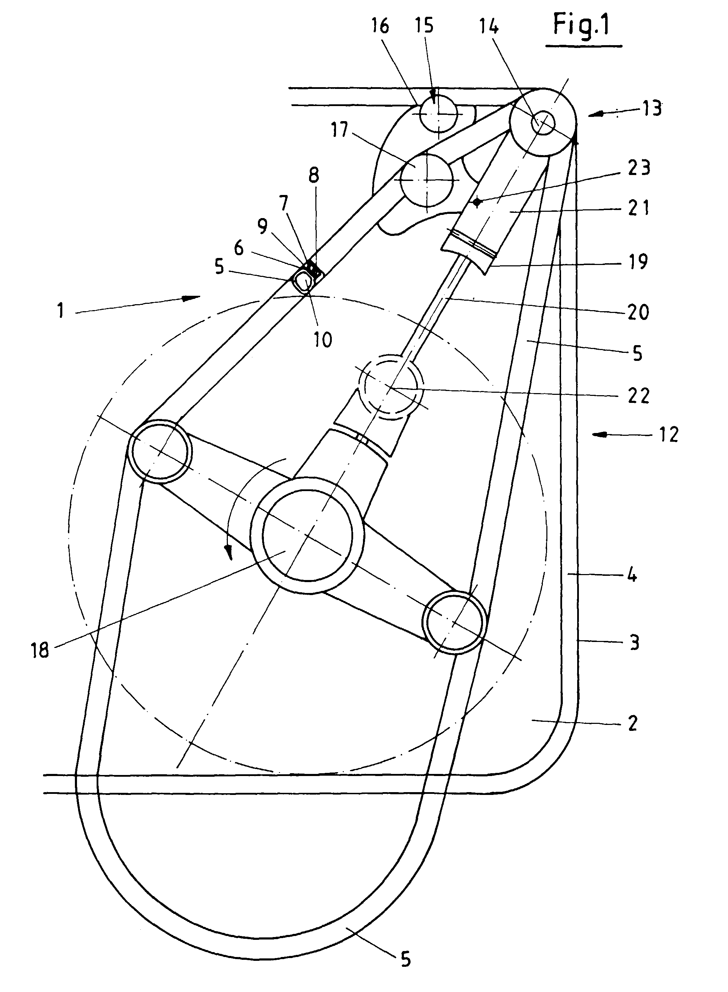

Fig. 1 zeigt eine vereinfacht wiedergegebene Montagevorrichtung 1, die in einer Öffnung 2 eines Kraftfahrzeuges 3 positioniert ist, um auf den rundumlaufenden Flansch 4 einen Profilflansch 5 aufzubringen. Dabei befindet sich die Montagevorrichtung 1 in der sicherlich kritischsten Arbeitsposition, nämlich genau in einem annähernd rechten Winkelbereich.

Der Profilschlauch 5 ist teilweise im Schnitt wiedergegeben, wobei deutlich wird, daß er über einen vom Träger 6 und den nach innen vorstehenden Lippen 7, 8 gebildeten Klemmbereich 9 sowie über den eigentlichen Dichtschlauch 10 verfügt.

Eine derartige Montagevorrichtung 1 verfügt über eine verfahrbare Einheit 12, wobei das Aufrollen des Profilschlauches 5 über die Rolle 13 erfolgt, die hier als Montagerolle 14 ausgebildet ist. Einzelheiten dieser Montagerolle 14 werden weiter hinten erläutert.

Wichtig ist, daß dieser Montagerolle 14 eine Flanschabtasteinrichtung 15 in Form einer Führungsrolle 16 vorgeordnet ist, über die die jeweilige Position und auch der Zustand des Flansches 4 ermittelt werden und an die Montagerolle 14 weitergeleitet werden kann. Die Führungsrolle 16 bzw. die Flanschabtasteinrichtung 15 ist dabei um das Schwenkgelenk 23 schwenkbar angebracht, um so auch Bewegungen unabhängig von der eigentlichen Montagerolle 14 zu ermöglichen. Gerade in der wiedergegebenen Arbeitsposition ist die Wichtigkeit dieser schwenkgelenkigen Anordnung erkennbar. Mit der Flanschabtasteinrichtung 15 verschwenkbar angeordnet ist eine Führungseinheit 17, über die der Profilschlauch 5 jeweils genau der jeweiligen Montagerolle 14 zugeführt wird.

Die Montagerolle 14 als solche ist mit dem Antrieb 18 über einen Zylinder 19 verbunden, wobei die Kolbenstange 20 bei der in Fig. 1 wiedergegebenen Ausführung um das Gelenk 22 schwenkbar mit dem eigentlichen Antrieb 18 in Verbindung steht. Der Antrieb 18 als solcher sorgt dafür, daß die Montagerolle 14 und damit auch die vorgeordnete Flanschabtasteinrichtung 15 und die Führungseinheit 17 gezielt am Flansch 4 entlanggeführt wird. Dabei ist das beschriebene Schwenkgelenk 23 am Zylindergehäuse 21 des Zylinders 19 angelenkt.

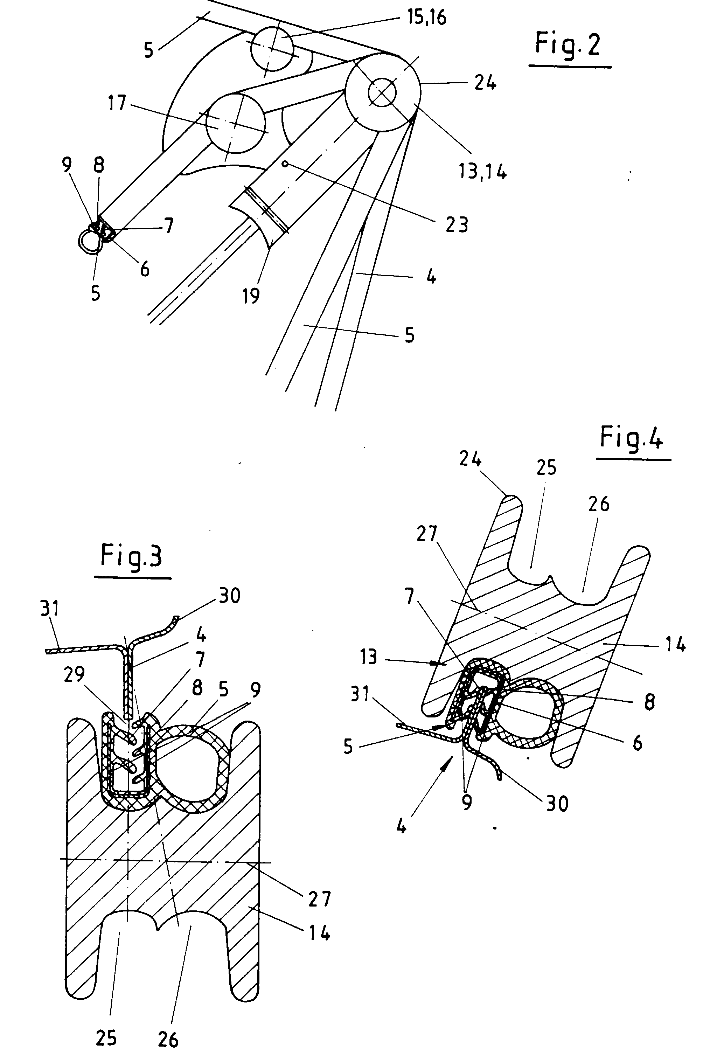

Der Anrollbereich ist in Fig. 2 vergrößert wiedergegeben. Dabei wird deutlich, daß die Montagerolle 14, wie auch in Fig. 3 gezeigt, den Profilschlauch 5 annähernd aufnehmend ausgebildet ist. Sie kann dabei sogar so ausgeführt sein, daß sie sich mit ihrem Rand 24 an der Innenseite des Flansches 4 abstützt. Eine Druckbelastung des Profilschlauches 5 als solcher ist damit ausgeschlossen.

Zur Aufnahme des Profilschlauches 5 ist die jeweilige Montagerolle 14 mit Ausnehmungen 25, 26 versehen, die genau der Form des Profilschlauches 5 angepaßt ausgebildet sind. Dabei sind diese Ausnehmungen 25, 26 und dabei insbesondere Ausnehmung 25 so geformt, daß sich der Klemmbereich 9 des Profilschlauches 5 mit dem Träger 6 genau rechtwinklig an der Montagerolle 14 abstützt, so daß eine genau rechtwinklige bzw. mittige Einführung des Flansches 4 in den Klemmbereich 9 gesichert ist. Der Dichtschlauch 10 neben dem Klemmbereich 9 bleibt bei diesem Aufrollprozeß unbeeinflußt und damit für die spätere Funktion auch garantiert voll erhalten. Lediglich der Flansch 4 schiebt sich in den Innenbereich und damit in den Klemmbereich 9 des Profilschlauches 5 ein, wie dies in Fig. 4 angedeutet ist.

Deutlich wird bei den Fig. 3 und 4, daß der Flansch 4 aus zwei zusammengefügten Karosserieteilen 30, 31 besteht, die durch den Profilschlauch 5 entsprechend abzusichern und abzudichten sind. Die Öffnungsausnehmung 29 wird aufgrund der entsprechenden Fixierung des Profilschlauches 5 in der Montagerolle 14 so gehalten, daß der Klemmbereich 9 genau mittig auf den Flansch 4 aufgerollt werden kann.

In Fig. 3 ist ergänzend angedeutet, daß durch Kippen oder Schwenken der Montagerolle 14 um die Achse 27 eine Anpassung der Aufrollposition an die Position des Flansches 4 problemlos möglich ist. Durch die genaue Einführung des Flansches 4 in den Klemmbereich 9 und damit in die Öffnungsausnehmung 29 ist sichergestellt, daß die unterschiedlichen Lippen 7, 8 sich genau und damit dicht an die beiden Seiten des Flansches 4 anschmiegen.

Vorteilhaft ist bei dem beschriebenen Verfahren und der zur Durchführung des Verfahrens vorgesehenen Vorrichtung, daß immer mit geschlossenem Profil gearbeitet werden kann, d. h. mit dem Profil, das auch beispielsweise für Reparaturen benötigt wird. Eine Verformung des Profils, wobei hier das Klemmprofil gemeint ist, ist im Nachhinein somit nicht notwendig, sondern es wird immer mit dem gleichen Profil für die verschiedenen Einsatzbereiche gearbeitet.

Alle genannten Merkmale, auch die den Zeichnungen allein zu entnehmenden, werden allein und in Kombination als erfindungswesentlich angesehen.

## Patentansprüche

1. Verfahren zum Anbringen von Dicht- und Abdeckstreifen auf den Randbereich von Öffnungen (2), wobei ein Profilschlauch (5) an den Flansch (4) zuammengedrückter, benachbarter Karosserieteile (30, 31) eines Kraftfahrzeuges (3) mit seinen innenseitig vorstehenden Lippen (7, 8) herangeführt, aufgesteckt und an ihn angepresst wird,
**dadurch gekennzeichnet**,
daß der mit seinem Träger (6) vorab dem Flansch angepaßt ausgebildete Profilschlauch (5) auf den Flansch (4) unter Berücksichtigung der Meßergebnisse einer unmittelbar voreilenden Abtastung axial über eine Andrückautomatik mit Montagerolle zielgemäß und genau aufgesetzt und dann schonend aufgerollt wird.

2. Verfahren nach Anspruch 1,
**dadurch gekennzeichnet**,
daß die Führung des Profilschlauches (5) und das Andrücken unter Wahrung der Schlauchform und der Anordnung der Lippen (7, 8) ausgeführt wird.

3. Vorrichtung zum Anbringen von Dicht- und Abdeckstreifen auf den Rand von Öffnungen (2), insbesondere eines Profilschlauches (5) mit Träger (6) und innenseitig vorstehenden Lippen (7, 8) auf den Flansch (4) benachbarter, miteinander verbundener Karosserieteile (30, 31) eines Kraftfahrzeuges (3) und damit zur Durchführung des Verfahrens nach Anspruch 1 und Anspruch 2, mit einer um die Öffnung (2) verfahrbaren Einheit (12), die über eine den Profilschlauch (5) beeinflussende und am Flansch (4) verfahrbare Rolle (13) verfügt,
**dadurch gekennzeichnet**,
daß die Rolle (13) als den einen geschlossenen Klemmbereich (9) aufweisenden Profilschlauch (5) auf den Flansch (4) aufrollende Montagerolle (14) ausgebildet ist, der eine führungmäßig mit ihr verbundene Flanschabtasteinrichtung (15) vorgeordnet ist.

4. Vorrichtung nach Anspruch 3,
**dadurch gekennzeichnet,**
daß die Flanschabtasteinrichtung (15) als Führungsrolle (16) ausgebildet ist.

5. Vorrichtung nach Anspruch 4,
**dadurch gekennzeichnet,**
daß die Flanschabtasteinrichtung (15) mechanisch und/oder elektrisch/elektronisch, diese entsprechend führend mit der Montagerolle (14) verbunden ist.

6. Vorrichtung nach Anspruch 3 - Anspruch 5,
**dadurch gekennzeichnet,**
daß die Flanschabtasteinrichtung (15) in einem vorgebbaren Abstand zur Montagerolle (14) angeordnet mit der verfahrbaren Einheit (12) verbunden ist.

7. Vorrichtung nach Anspruch 3,
**dadurch gekennzeichnet,**
daß die Montagerolle (14) direkt oder über eine Führungseinheit (17) frei gelagert ausgebildet ist und mit dem im Inneren der Öffnung (2) angeordneten Antrieb (18) der Einheit (12) verbunden ist.

8. Vorrichtung nach Anspruch 3,
**dadurch gekennzeichnet,**
daß die Montagerolle (14) umfangseitig dem Profilschlauch (5) angepaßte Ausnehmungen (25, 26) aufweist.

9. Vorrichtung nach Anspruch 8,
**dadurch gekennzeichnet,**
daß die Ausnehmungen (25, 26) in der Montagerolle (14) den Profilschlauch (5) mit dem durch den Träger (6) vorgegebenen, geschlossenen Klemmbereich (9) annähernd rechtwinklig fixierend angeordnet und ausgebildet sind.

10. Vorrichtung nach Anspruch 7,
**dadurch gekennzeichnet,**
daß der Antrieb (18) schwenkbar ausgebildet und mit Montagerolle (14), Führungseinheit (17) und Flanschabtasteinrichtung (15) über einen Zylinder (19) verbunden ist.

11. Vorrichtung nach Anspruch 10,
**dadurch gekennzeichnet,**
daß der Zylinder (19) stangenseitig gelenkig mit dem Antrieb (18) verbunden ist.

12. Vorrichtung nach Anspruch 10 und Anspruch 11,
**dadurch gekennzeichnet,**
daß Führungseinheit (17) und Flanschabtasteinrichtung (15) über ein Schwenkgelenk (23) mit dem Zylinder (19) verbunden sind.

## Claims

1. Method for fitting sealing and cover strips onto the edges of openings (2), whereby a profiled tube (5) is brought to the flange (4) of pressed together adjacent body parts (30, 31) of a motor vehicle (3) with its inner projecting lips (7, 8) and fitted and pressed onto the latter, characterised in that the profiled tube (5) designed with its carrier (6) to correspond with the flange is placed specifically and precisely axially onto the flange (4), taking into account the results of a rapid advance scan, by means of a pressing machine with assembly roller, and is then gently rolled on.

2. Method according to claim 1, characterised in that the profiled tube (5) and is guided and pressed in such a way as to protect the tubular shape and the arrangement of the lips (7, 8).

3. Device for fitting sealing and cover strips onto the edges of openings (2), in particular a profiled tube (5) with carrier (6) and inner projecting lips (7, 8) onto the flange (4) of adjacent, connected body parts (30, 31) of a motor vehicle (3), and for performing the method according to claim 1 and claim 2, with a unit (12) that is movable around the opening (2) comprising a roller (13) that influences the profiled tube (5) and is movable on the flange (4), characterised in that the roller (13) is designed as an assembly roller (14) rolling the profiled tube (5) with a closed clamping region (9) onto the flange (4) and is arranged in front of a flange scanning device (15) connected guidingly therewith.

4. Device according to claim 3, characterised in that the flange scanning device (15) is designed as a guide roller (16).

5. Device according to claim 4, characterised in that the flange scanning device (15) is connected mechanically and/or electrically/electronically, guiding the latter accordingly with the assembly roller (14).

6. Device according to claim 3 - claim 5, characterised in that the flange scanning device (15) is arranged at a specific distance from the assembly roller (14) connected to the movable unit (12).

7. Device according to claim 3, characterised in that the assembly roller (14) is designed to be freely mounted directly or by a guide unit (17) and is connected to the drive (18) of the unit (12) arranged on the inside of the opening (2).

8. Device according to claim 3, characterised in that the assembly roller (14) comprises recesses (25, 26) corresponding peripherally to the profiled tube (5).

9. Device according to claim 8, characterised in that the recesses (25, 26) in the assembly roller (14) are arranged and designed to fix almost at right angles the profiled tube (5) with the closed clamping region (9) provided by the support (6).

10. Device according to claim 7, characterised in that the drive (18) is designed to be pivotable and is connected to the assembly roller (14), guide unit (17) and flange scanning device (15) by a cylinder (19).

11. Device according to claim 10, characterised in that the cylinder (19) is hinge connected on the rod side with the drive (18).

12. Device according to claim 10 and claim 11, characterised in that the guide unit (17) and flange scanning device (15) are connected by means of pivot hinge (23) with the cylinder (19).

## Revendications

1. Procédé pour appliquer des bandes d'étanchéité et de recouvrement sur la zone de bord d'ouvertures (2), procédé dans lequel un tube flexible profilé (5), avec ses lèvres (7,8) faisant saillie du côté intérieur, est approché de la bride (4) de pièces de carrosserie (30,31), voisines et pressées l'une contre l'autre, d'un véhicule automobile (3), rapporté et pressé sur cette bride,
caractérisé en ce que
le tube flexible profilé (5), dont le support (6) était tout d'abord formé adapté à la bride, est posé sur la bride (4) axialement par un mécanisme automatique d'appui à galet de montage de façon adaptée et avec précision, en prenant en compte les résultats de mesure d'un palpage immédiatement précédent et est ensuite rapporté par roulage sur la bride avec ménagement.

2. Procédé selon la revendication 1,
caractérisé en ce que
le guidage du tube flexible profilé (5) et son pressage sont effectués en gardant la forme de tube flexible et l'agencement des lèvres (7,8).

3. Dispositif pour appliquer des bandes d'étanchéité et de recouvrement au bord d'ouvertures (2), notamment pour appliquer un tube flexible profilé (5) comportant un support (6) et des lèvres (7,8) qui font saillie sur le côté intérieur, sur la bride (4) de pièces de carrosserie (30,31) d'un véhicule automobile (3), voisines et reliées l'une à l'autre, et en conséquence pour la mise en oeuvre du procédé selon la revendication 1 et la revendication 2, dispositif comprenant une unité (12) qui peut être déplacée autour de l'ouverture (2) et qui dispose d'un galet (13) influençant le tube flexible profilé (5) et pouvant être déplacé sur la bride (4),
caractérisé en ce que
le galet (13) est formé en galet d'assemblage (14) qui rapporte par roulage sur la bride (4) le tube flexible profilé (5) comportant une zone de serrage (9) fermée, et devant lequel est monté un dispositif de palpage de bride (15) relié au galet pour un guidage.

4. Dispositif selon la revendication 3,
caractérisé en ce que
le dispositif de palpage de bride (15) est réalisé en tant que galet de guidage (16).

5. Dispositif selon la revendication 4,
caractérisé en ce que
le dispositif de palpage de bride (15) est relié mécaniquement et/ou électriquement/électroniquement au galet d'assemblage (14), en guidant ce dernier d'une façon correspondante.

6. Dispositif selon l'une quelconque des revendications 3 à 5,
caractérisé en ce que
le dispositif de palpage de bride (15) est relié à l'unité pouvant être déplacée (12) en étant agencé à une distance pouvant être prédéterminée par rapport au galet d'assemblage (14).

7. Dispositif selon la revendication 3,
caractérisé en ce que
le galet d'assemblage (14) est monté librement, directement ou par l'intermédiaire d'une unité de guidage (17), et est relié à l'entraînement (18) de l'unité (12) disposé à l'intérieur de l'ouverture (2).

8. Dispositif selon la revendication 3,
caractérisé en ce que
le galet d'assemblage (14) présente sur son côté circonférentiel des évidements (25,26) adaptés au tube flexible profilé (5).

9. Dispositif selon la revendication 8,
caractérisé en ce que
les évidements (25,26) sont agencés et formés dans le galet d'assemblage (14) de façon qu'ils fixent sensiblement perpendiculairement le tube flexible profilé (5) avec la zone de serrage (9) fermée et prédéterminée par le support (6).

10. Dispositif selon la revendication 7,
caractérisé en ce que
l'entraînement (18) est réalisé pivotant et est relié, par l'intermédiaire d'un vérin (19) au galet d'assemblage (14), à l'unité de guidage (17) et au dispositif de palpage de bride (15).

11. Dispositif selon la revendication 10,
caractérisé en ce que
le vérin (19) est relié sur son côté tige à l'entraînement (18) par une articulation.

12. Dispositif selon la revendication 10 et la revendication 11,
caractérisé en ce que
l'unité de guidage (17) et le dispositif de palpage de bride (15) sont reliés au vérin (19) par l'intermédiaire d'un joint oscillant (23).
